# EUROPÄISCHE PATENTSCHRIFT

(11) **EP 2 760 688 B1**
(45) Veröffentlichungstag und Bekanntmachung des Hinweises auf die Patenterteilung: **12.04.2017**
(21) Anmeldenummer: 12762291.8
(22) Anmeldetag: 25.09.2012
(51) Int. Cl.: B60J 5/10

(54) **KFZ-HECKKLAPPE**
VEHICLE TAILGATE
HAYON ARRIÈRE DE VÉHICULE

(30) Priorität: 26.09.2011 DE 102011083418
(43) Veröffentlichungstag der Anmeldung: 06.08.2014
(73) Patentinhaber: Bayerische Motoren Werke Aktiengesellschaft, 80809 München (DE)
(72) Erfinder: LATHWESEN, Harald, 85419 Mauern (DE)
(86) Internationale Anmeldenummer: PCT/EP2012/068860
(87) Internationale Veröffentlichungsnummer: WO 2013/045438

(56) Entgegenhaltungen:
- EP-A1- 1 457 373
- DE-A1- 19 635 873
- DE-A1-102007 039 808
- DE-A1-102007 052 620
- DE-T2- 69 822 169
- US-A1- 2005 168 010

## Beschreibung

Die Erfindung betrifft ein Kraftfahrzeug gemäß dem Oberbegriff des Anspruchs 1.

Aus der DE 10 2007 039 808 A1 ist bereits ein Kraftfahrzeug bekannt, bei dem eine verschwenkbare Heckklappe vorgesehen ist. Durch die aus der DE 10 2007 039 808 A1 bekannte Bauweise ist es möglich, die Beladungsbreite der Heckklappenöffnung zumindest im Bereich einer Heckfensterscheibe zu vergrößern.

Aus der EP 1 011 995 B1 (DE 698 22 169 T2) ist eine Heckklappe für ein Kraftfahrzeug bekannt, bei der in den seitlichen Holmen parallel zu einer Heckfensterscheibe jeweils eine Gasdruckfeder zum Anheben der Heckfensterscheibe vorgesehen ist.

Aufgabe der Erfindung ist es, ein Kraftfahrzeug zu schaffen, das eine Heckklappe oder einen Kofferraumdeckel aufweist, wobei das Öffnen und/oder das Schließen der Heckklappe oder des Kofferraumdeckels durch die Betätigungskraft einer Vorrichtung unterstützt wird oder erfolgt.

Diese Aufgabe wird durch die Merkmale des Anspruchs 1 gelöst.

Ein erfindungsgemäßes Kraftfahrzeug weist eine Karosserie auf, an der eine Karosserieöffnung an einem Fahrzeugheck ausgebildet ist. In der Karosserieöffnung ist eine Heckklappe oder ein Kofferraumdeckel verschwenkbar an einem Dachabschnitt der Karosserie angeordnet ist. Die Heckklappe oder der Kofferraumdeckel weist einen Körperabschnitt und eine Heckfensterscheibe auf. Ferner ist mindestens eine Dichtung vorgesehen, die an der Karosserieöffnung zur Abdichtung der Heckklappe oder des Kofferraumdeckels angeordnet ist. An der Heckklappe oder dem Kofferraumdeckel sind seitlich voneinander beabstandete seitliche Profile ausgebildet.

Erfindungsgemäß sind die seitlichen Profile jeweils mit einem Hohlraum versehen, in dem jeweils eine Vorrichtung angeordnet ist, die zum Anheben und/oder Absenken der Heckklappe oder des Kofferraumdeckels dient, wobei die jeweilige eine Vorrichtung zwischen dem Dachabschnitt der Karosserie und der Heckklappe oder dem Kofferraumdeckels angeordnet ist.

In einer vorteilhaften Ausführungsform ist die Vorrichtung zum Anheben und/oder Absenken der Heckklappe oder des Kofferraumdeckels ein Bauteil ist, das eine gespeicherte Federkraft freisetzen kann, wobei die freigesetzte Federkraft nach der vorgesehenen Unterstützungsaktion manuell zurückgeführt wird. In einer anderen vorteilhaften Ausführungsform ist die Vorrichtung an eine Energiequelle angeschlossen, so dass die Energie bei der Benutzung der Vorrichtung direkt zugeführt wird.

Die Vorrichtung ist vorteilhafterweise eine pneumatische Feder, insbesondere eine Gasdruckfeder, die neben der Bereitstellung einer Federkraft auch eine Dämpfung bewirkt.

Vorteilhafterweise ist die Vorrichtung eine von einem Elektromotor angetriebene Vorrichtung.

Die von einem Elektromotor angetriebene Vorrichtung weist in einer vorteilhaften Ausführungsform als Antriebsmittel Bewegungsschrauben oder Seilzüge auf. Die Seilzüge können mit Umlenkeinrichtungen versehen sein.

In einer vorteilhaften Ausführungsform ist ein Ende der jeweiligen Vorrichtung an einem Lager angeordnet, das an dem jeweiligen seitlichen Profil der Heckklappe oder des Kofferraumdeckels ausgebildet ist. Ein dazu gegenüberliegendes Ende der Vorrichtung ist an einem Lager angelenkt, das an einem Bauteil der Karosserie angeordnet ist.

An dem jeweiligen seitlichen Profil der Heckklappe oder des Kofferraumdeckels ist vorteilhafterweise ein freies Ende eines Scharniers befestigt. Ein dazu gegenüberliegendes freies Ende des Scharniers ist an einem Lager angeordnet, das an einem Bauteil der Karosserie ausgebildet ist.

In einer vorteilhaften Ausführungsform ist der Hohlraum des jeweiligen seitlichen Profils so groß bemessen, dass die jeweilige Vorrichtung mit einem Spiel zwischen zwei Grenzlagen bewegbar ist, wobei sich die Grenzlagen durch den geschlossenen Zustand der Heckklappe oder des Kofferraumdeckels und durch den geöffneten Zustand der Heckklappe oder des Kofferraumdeckels ergeben.

Vorteilhafterweise ist durch den Wegfall einer Regenrinne oder durch die Verkleinerung der Breite einer Regenrinne an einem Profilabschnitt, der an den Karosseriebauteilen der Heckklappenöffnung ausgebildet ist, und an dem ein Dichtungsprofil befestigt ist, die Größe der Heckklappenöffnung erhöht.

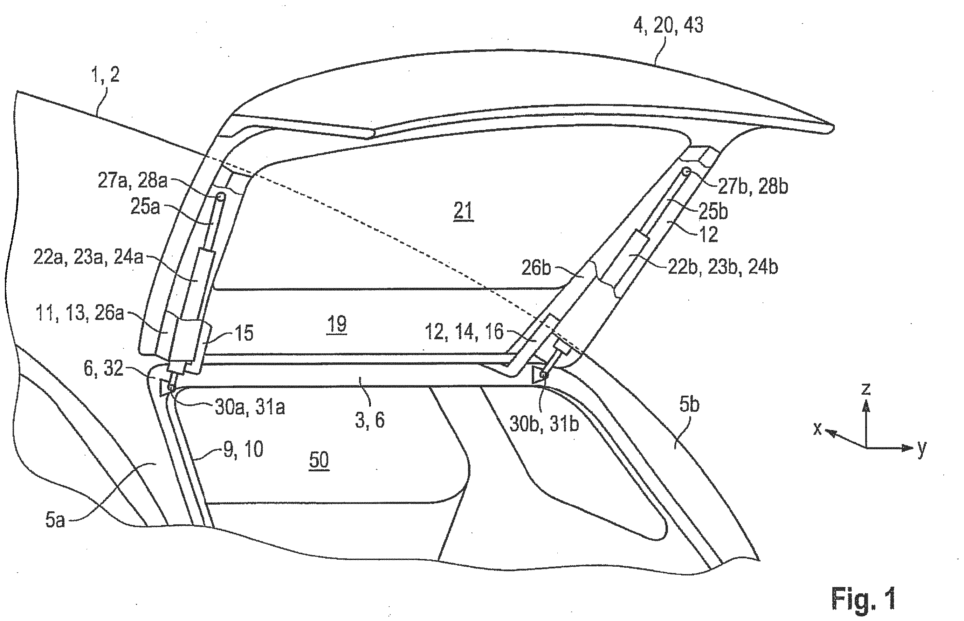

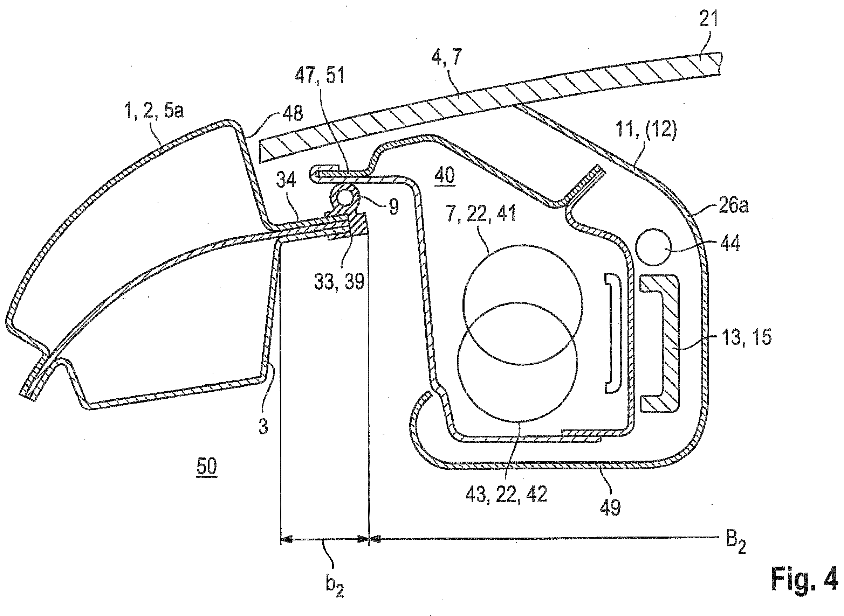

Eine Ausführungsform der Erfindung wird nachstehend anhand der Zeichnungen beispielshalber beschrieben. Fig.1-3 zeigen den Stand der Technik und Fig.4-5 die Erfindung.
- Fig. 1: eine perspektivische Darstellung eines teilweise dargestellten Heckbereichs eines Kraftfahrzeuges, bei dem sich die Heckklappe in einem geöffneten Zustand befindet,

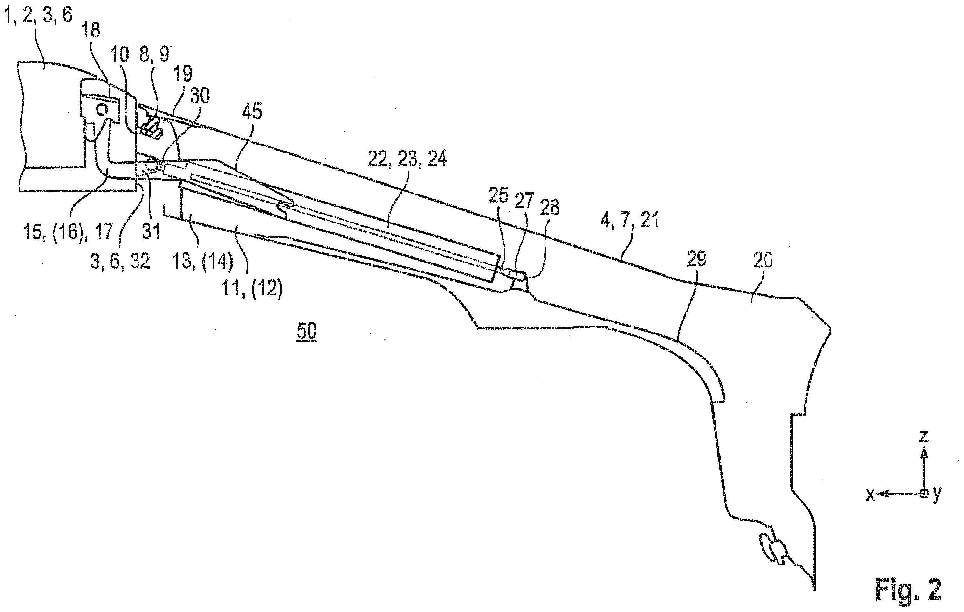

- Fig. 2: eine Schnittdarstellung durch die in der Fig. 1 gezeigte Heckklappe in einem geschlossenen Zustand der Heckklappe, wobei der Schnitt durch einen seitlichen Holm der Heckklappe geht, so dass die Anordnung einer Gasdruckfeder in einem Hohlraum des Holms erkennbar ist,

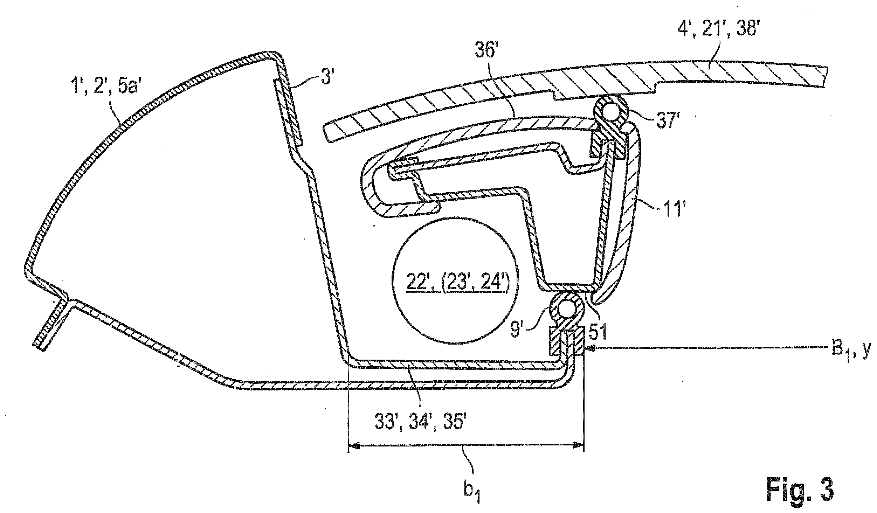

- Fig. 3: eine Ansicht eines Querschnitts eines Randbereichs einer bekannten Heckklappe, die eine verschwenkbare Heckfensterscheibe aufweist, wobei an einem Rahmenabschnitt der Karosserie eine Regenrinne ausgebildet ist und zwischen der Regenrinne und einem seitlichen Holm der Heckklappe oder des Kofferraumdeckels eine Gasdruckfeder angeordnet ist,
- Fig. 4: eine Ansicht eines Querschnitts eines Randbereichs der erfindungsgemäßen Heckklappe oder des erfindungsgemäßen Kofferraumdeckels, wobei die Anordnung einer Vorrichtung zum Anheben oder Absenken der Heckklappe oder des Kofferraumdeckels in einem Hohlraum eines seitlichen Profils oder Holms der Heckklappe oder des Kofferraumdeckels angeordnet ist und

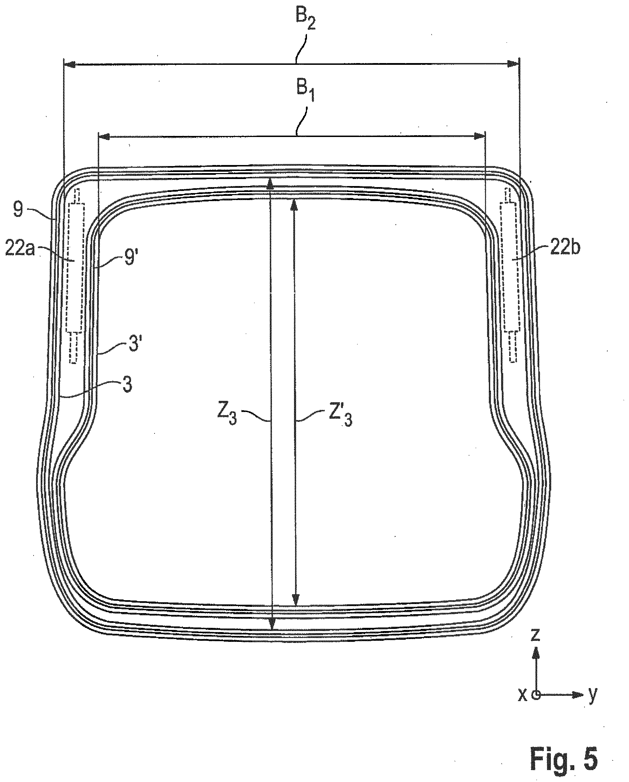

- Fig. 5: eine Draufsicht auf eine Heckklappenöffnung entsprechend der in der Fig. 3 gezeigten, bekannten Bauweise und einer Heckklappenöffnung entsprechend der in der Fig. 4 gezeigten, erfindungsgemäßen Bauweise, wobei durch den Wegfall von zueinander beabstandeten, gegenüberliegenden Regenrinnen oder durch die Verringerung der Breite von zueinander beabstandeten, gegenüberliegenden Regenrinnen zumindest in einem oberen Bereich der Heckklappenöffnung eine Vergrößerung der Beladungsbreite erreicht ist.

Die Fig. 1 zeigt ein Kraftfahrzeug 1, bei dem in einer Karosserie 2 eine Heckklappenöffnung 3 ausgebildet ist, in der eine Heckklappe 4 angeordnet ist. In der Fig. 1 befindet sich die Heckklappe 4 in einem geöffneten Zustand 43. Die Heckklappenöffnung 3 ist von zwei gegenüberliegenden Karosseriesäulen 5a und 5b, einem Dachabschnitt 6 sowie einem nicht dargestellten Kofferraumbodenabschnitt umrandet.

In einem in der Fig. 2 gezeigten geschlossenen Zustand 7 der Heckklappe 4 liegt ein umlaufender Rand 8 der Heckklappe 4 an einem umlaufenden Dichtungsprofil 9 an, das an einem umlaufenden Rand 10 der Heckklappenöffnung 3 angeordnet ist.

Die Heckklappe 4 weist zwei seitliche Holme oder Profile 11, 12 auf, an deren Enden 13, 14 jeweils ein Scharnier 15, 16 befestigt ist. Ein jeweiliges, in der Fig. 2 gezeigtes karosserieseitiges Ende 17 des jeweiligen Scharniers 15, 16 ist in bekannter Weise an dem Dachabschnitt 6 über ein Lager 18 schwenkbar angeordnet.

In der gezeigten Ausführungsform erstreckt sich zwischen den beiden seitlichen Profilen 11, 12 ein oberer, in Fahrzeugquerrichtung y erstreckender Querabschnitt 19 der Heckklappe 4. Zwischen den seitlichen Profilen 11, 12, dem oberen Querabschnitt 19 und einem unteren Heckklappenkörper 20 ist eine Heckfensterscheibe 21 angeordnet.

In der gezeigten Ausführungsform ist das jeweilige seitliche Profil 11, 12 nur teilweise dargestellt, so dass jeweils eine Vorrichtung 22a, 22b zum Anheben und/oder Absenken der Heckklappe 4 sichtbar ist. In der in den Fig. 1 und 2 gezeigten Ausführungsform ist die Vorrichtung 22 beispielsweise eine Gasdruckfeder 23.

In einer anderen, nicht dargestellten Ausführungsform ist die Vorrichtung 22 elektrisch betrieben. Die elektrisch betriebene Vorrichtung 22 weist beispielsweise einen Elektromotor und ein damit verbundenes Antriebsmittel auf. Die Antriebsmittel können beispielsweise Bewegungsschrauben, wie ein Spindelantrieb, oder Seilzüge oder Bowdenzüge, gegebenenfalls mit Umlenkeinrichtungen und/oder Flaschenzügen, sein

Die in den Fig. 1 und 2 als Gasdruckfeder 23a, 23b dargestellte Vorrichtung 22a, 22b weist einen Zylinder 24a, 24b sowie einen Kolben 25a, 25b auf. In der gezeigten Ausführungsform ist das jeweilige seitliche Profil 11, 12 durch eine Abdeckung 26a, 26b umgeben. Wie aus den Fig. 1 und 2 hervorgeht, ist ein freies Ende 27a, 27b des Kolbens 25a, 25b an einem Lager 28 angeordnet, das an einer Innenfläche 29 des jeweiligen seitlichen Profils 11, 12 angeordnet ist. Ein freies Ende 30a, 30b des jeweiligen Zylinders 24a, 24b ist an einem Lager 31a, 31b angeordnet, das an der Karosserie 2 an einem Querabschnitt 32 des Dachabschnittes 6 ausgebildet ist.

Die Fig. 3 zeigt eine Querschnittsansicht durch einen Randbereich einer bekannten Heckklappe 4'. Am Randbereich der bekannten Heckklappe 4' ist eine Karosseriesäule 5a' ausgebildet, die einen U-förmigen Profilabschnitt 33' aufweist. Der U-förmige Profilabschnitt 33' dient zum einen als Regenrinne und zum anderen zur Befestigung eines umlaufenden Dichtungsprofils 9'. Zwischen einem L-förmigen seitlichen Profil 11' und dem U-förmigen Profilabschnitt 33' der Karosseriesäule 5a' ist eine Vorrichtung 22' angeordnet, die beispielsweise eine Gasdruckfeder 23' sein kann.

In der Fig. 3 ist der Zylinder 24' der Gasdruckfeder 23' dargestellt. Eine Breite b₁ eines waagrechten Abschnittes 35' des U-förmigen Profilabschnittes 33' verringert eine Beladungsbreite B₁ in Fahrzeugquerrichtung y. An einer nach außen zeigenden Außenfläche 36' des seitlichen Profils 11' ist eine Dichtung 37' vorgesehen. An der Dichtung 37' liegt eine Unterseite einer Heckfensterscheibe 21' auf, die aus einer in der Fig. 3 gezeigten geschlossenen Position 38' in eine nicht dargestellte geöffnete Position verschwenkbar ist.

Die Fig. 4 zeigt eine Querschnittansicht durch einen Randbereich der erfindungsgemäßen Heckklappe 4 oder des erfindungsgemäßen Kofferraumdeckels 4. Die Vorrichtung 22 zum Anheben oder Absenken der Heckklappe oder des Kofferraumdeckels 4 ist in einem Hohlraum 40 des seitlichen Profils oder des Holms 11 (12) der Heckklappe oder des Kofferraumdeckels 4 angeordnet

Bei der erfindungsgemäßen Bauweise ist ein in die Heckklappenöffnung 3 vorstehender Profilabschnitt 33 der Karosseriesäule 5a vorgesehen. An einem Ende 39 des Profilabschnittes 33 ist das Dichtungsprofil 9 befestigt. Am jeweiligen seitlichen Profil 11, 12 ist ein Profilabschnitt 47 mit einer Dichtungsfläche 51 vorgesehen. Der Profilabschnitt 47 zeigt in Richtung einer Außenfläche 48 der die Heckklappe 4 umgebenden Heckklappenöffnung 3. Die Dichtungsfläche 51 des Profilabschnitts 47 ist gegenüber dem Dichtungsprofil 9 ausgebildet. Im geschlossenen Zustand der Heckklappe 4 liegt die Dichtungsfläche 51 des jeweiligen seitlichen Profils 11, 12 an dem Dichtungsprofil 9 an.

Durch den Wegfall oder die Verkleinerung der Regenrinne 34 gegenüber der in den Fahrzeuginnenraum 50 zeigenden Außenfläche 49 des jeweiligen seitlichen Profils 11, 12 ist die zur Verfügung stehende Fläche der Heckklappenöffnung 3 vergrößert.

Der Profilabschnitt 33 ist durch den Wegfall oder die Verkleinerung der Regenrinne 34 im Vergleich zu dem U-förmigen Profilabschnitt 33' der Fig. 3 schmaler ausgebildet und weist entsprechend eine Breite b₂ auf, die kleiner ist als die Breite b₁ des U-förmigen Profilabschnittes 33'. Dadurch ergibt sich eine größere Beladungsbreite B₂ in Fahrzeugquerrichtung y und wie aus der Fig.5 bei den Bemaßungen z₃' und z₃ hervorgeht auch eine größere Beladungshöhe in Richtung der Fahrzeughöhe z.

In der Fig. 4 sind ferner die beiden Grenzlagen 41, 42 der Vorrichtung 22 im geschlossenen Zustand 7 und im geöffneten Zustand 43 dargestellt. Das jeweilige seitliche Profil 11, 12 ist von einer Abdeckung 26a, 26b umgeben. Parallel zu dem unteren Ende 13, 14 des jeweiligen seitlichen Profils 11, 12 ist jeweils das Scharnier 15, 16 angeordnet. Oberhalb des Scharniers 15 ist ein Kabelbaum 44 dargestellt.

In der in der Fig. 4 gezeigten Heckklappe 4 ist die Heckfensterscheibe 21 im Unterschied zu der in der Fig. 3 gezeigten, verschwenkbaren Heckklappe 4' fest an der Heckklappe 4 angeordnet. In einer Ausführungsform kann die Heckfensterscheibe 21 der Heckklappe 4 auch verschwenkbar ausgebildet sein.

Die Fig. 5 zeigt die Vergrößerung der Beladungsbreite von der schmaleren Beladungsbreite B₁ mit der Anordnung jeweils einer (Betätigungs-)Vorrichtung 22'a, 22'b oberhalb eines Profilabschnittes 33' im Vergleich zu der erfindungsgemäßen Beladungsbreite B₂ bei der Anordnung der jeweiligen Betätigungsvorrichtung 22a, 22b in einem Hohlraum 40a, 40b des jeweiligen seitlichen Profils 11, 12 der Heckklappe 4. Wie aus den Bemaßungen z₃' und z₃ der Fig.5 hervorgeht, ist in der gezeigten Ausführungsform auch die Beladungshöhe z₃ in Richtung der Fahrzeughöhe z größer.

## Patentansprüche

1. Kraftfahrzeug (1) mit einer Karosserie (2), mit einer in der Karosserie (2) ausgebildeten Karosserieöffnung (3) an einem Fahrzeugheck, wobei in der Karosserieöffnung (3) eine Heckklappe (4) oder ein Kofferraumdeckel (4) verschwenkbar an einem Dachabschnitt (6) der Karosserie (2) angeordnet ist, wobei die Heckklappe (4) einen Körperabschnitt (20) und eine Heckfensterscheibe (21) aufweist, mit mindestens einer Dichtung (9), die an der Karosserieöffnung (3) zur Abdichtung der Heckklappe (4) oder des Kofferraumdeckels (4) angeordnet ist, wobei an der Heckklappe (4) oder dem Kofferraumdeckel (4) seitlich voneinander beabstandete seitliche Profile (11, 12) ausgebildet sind,
**dadurch gekennzeichnet, dass** die seitlichen Profile (11, 12) jeweils einen Hohlraum (40) aufweisen, dass in dem Hohlraum (40) jeweils eine Vorrichtung (22; 23, 24, 25) zum Anheben u nd/oder Absenken der Heckklappe (4) oder des Kofferraumdeckels (4) angeordnet ist, und dass die jeweilige Vorrichtung (22; 23, 24, 25) zwischen dem Dachabschnitt (6) der Karosserie (2) und der Heckklappe oder dem Kofferraumdeckels (4) angelenkt ist.

2. Kraftfahrzeug nach Anspruch 1,
**dadurch gekennzeichnet, dass** die Vorrichtung (22) zum Anheben und/oder Absenken der Heckklappe oder des Kofferraumdeckels (4) ein Bauteil ist, das eine gespeicherte Federkraft freisetzen kann, wobei die freigesetzte Federkraft nach der vorgesehenen Unterstützungsaktion manuell zurückgeführt wird oder dass die Vorrichtung (22) an eine Energiequelle angeschlossen ist, so dass die Energie bei der Benutzung der Vorrichtung (22) direkt zugeführt wird.

3. Kraftfahrzeug nach den Ansprüchen 1 oder 2,
**dadurch gekennzeichnet, dass** die Vorrichtung (22) eine pneumatische Feder, insbesondere eine Gasdruckfeder (23) ist, die neben der Bereitstellung einer Federkraft auch eine Dämpfung bewirkt.

4. Kraftfahrzeug nach Anspruch 2,
**dadurch gekennzeichnet, dass** die Vorrichtung (22) eine von einem Elektromotor angetriebene Vorrichtung ist.

5. Kraftfahrzeug nach Anspruch 4,
**dadurch gekennzeichnet, dass** die von einem Elektromotor angetriebene Vorrichtung (22) als Antriebsmittel Bewegungsschrauben oder Seilzüge, aufweist.

6. Kraftfahrzeug nach einem der vorhergehenden Ansprüche,
**dadurch gekennzeichnet, dass** ein Ende (27) der jeweiligen Vorrichtung (22, 23, 25) an einem Lager (28) angeordnet ist, das an dem jeweiligen seitlichen Profil (11, 12) der Heckklappe oder des Kofferraumdeckels (4) angeordnet ist und dass ein dazu gegenüberliegendes Ende (30) der Vorrichtung (22, 23, 24) an einem Lager (31) angelenkt ist, das an einem Bauteil (6, 32) der Karosserie (2) ausgebildet ist.

7. Kraftfahrzeug nach einem der vorhergehenden Ansprüche,
**dadurch gekennzeichnet, dass** an dem jeweiligen seitlichen Profil (11, 12) der Heckklappe oder des Kofferraumdeckels (4) ein freies Ende (45) eines Scharniers (15, 16) befestigt ist und dass ein dazu gegenüberliegendes freies Ende (46) des Scharniers (15, 16) an einem Lager (18) angeordnet ist, das an einem Bauteil (6) der Karosserie (2) ausgebildet ist.

8. Kraftfahrzeug nach einem der vorhergehenden Ansprüche,
**dadurch gekennzeichnet, dass** der Hohlraum (40) des jeweiligen seitlichen Profils (11, 12) so groß bemessen ist, dass die jeweilige Vorrichtung (22) mit einem Spiel zwischen Grenzlagen (41, 42) bewegbar ist, wobei sich die Grenzlagen (41, 42) durch den geschlossenen Zustand (7) der Heckklappe oder des Kofferraumdeckels (4) und durch den geöffneten Zustand (43) der Heckklappe oder des Kofferraumdeckels (4) ergeben.

9. Kraftfahrzeug nach einem der vorhergehenden Ansprüche,
**dadurch gekennzeichnet, dass** durch den Wegfall einer Regenrinne (34) oder die Verkleinerung der Breite einer Regenrinne (34) an einem Profilabschnitt (33), der an den Karosseriebauteilen (5, 6) der Heckklappenöffnung (3) ausgebildet ist, und an dem ein Dichtungsprofil (9) befestigt ist, die Größe der Heckklappenöffnung (3) erhöht ist.

## Claims

1. A motor vehicle (1) having a body (2), with a body opening (3) formed in the body (2), in the rear of the vehicle, wherein a boot lid (4) or a luggage compartment door (4) is arranged swivelably on a roof portion (6) of the body (2) in the body opening (3), wherein the boot lid (4) has a body portion (20) and a rear window pane (21), with at least one seal (9) which is arranged on the body opening (3) to seal the boot lid (4) or the luggage compartment door (4), wherein lateral profiles (11, 12) which are spaced apart laterally from one another are configured on the boot lid (4) or on the luggage compartment door (4),
**characterised in that** the lateral profiles (11, 12) have a respective cavity (40), **in that** a respective device (22; 23, 24, 25) is arranged in the cavity (40) for raising and/or lowering the boot lid (4) or the luggage compartment door (4), and **in that** the respective device (22; 23, 24, 25) is connected between the roof portion (6) of the body (2) and the boot lid or the luggage compartment door (4).

2. A motor vehicle according to claim 1,
**characterised in that** the device (22) for raising and/or lowering the boot lid or the luggage compartment door (4) is a component which can release a stored spring force, the released spring force being returned manually after the provided supporting action, or **in that** the device (22) is connected to an energy source, so that the energy is supplied directly when the device (22) is used.

3. A motor vehicle according to claim 1 or claim 2,
**characterised in that** the device (22) is a pneumatic spring, especially a gas pressure spring (23) which also causes a damping effect in addition to providing a spring force.

4. A motor vehicle according to claim 2,
**characterised in that** the device (22) is a device driven by an electric motor.

5. A motor vehicle according to claim 4,
**characterised in that** the device (22) driven by an electric motor has motion screws or cable pulls as drive means.

6. A motor vehicle according to any of the preceding claims,
**characterised in that** one end (27) of the respective device (22, 23, 25) is arranged on a bearing (28) which is arranged on the respective lateral profile (11, 12) of the boot lid or luggage compartment door (4), and **in that** an end (30), opposite thereto, of the device (22, 23, 24) is linked to a bearing (31) which is configured on a component (6, 32) of the body (2).

7. A motor vehicle according to any of the preceding claims,
**characterised in that** a free end (45) of a hinge (15, 16) is attached to the respective lateral profile (11, 12) of the boot lid or luggage compartment door (4), and **in that** a free end (46), opposite thereto, of the hinge (15, 16) is arranged on a bearing (18) which is configured on a component (6) of the body (2).

8. A motor vehicle according to any of the preceding claims,
**characterised in that** the cavity (40) of the respective lateral profile (11, 12) is calculated to be large enough for the respective device (22) to be movable with a clearance between limit positions (41,42), the limit positions (41, 42) resulting from the closed state (7) of the boot lid or luggage compartment door (4) and from the open state (43) of the boot lid or luggage compartment door (4).

9. A motor vehicle according to any of the preceding claims,
**characterised in that** the size of the boot lid opening (3) is increased by omitting a drip rail (34) or by reducing the width of a drip rail (34) on a profile portion (33) which is configured on the body components (5, 6) of the boot lid opening (3), and to which a sealing profile (9) is attached.

## Revendications

1. Véhicule (1) équipé d'une carrosserie (2) ayant une ouverture de carrosserie (3) formée dans cette carrosserie (2) au niveau de l'arrière du véhicule, un hayon (4) ou un capot de coffre (4) étant monté pivotant sur un segment de toit (6) de la carrosserie (2), le hayon (4) comportant un segment de corps (20) et une vitre arrière (21) et étant équipé d'au moins un joint d'étanchéité (9) monté sur l'ouverture de carrosserie (3) pour réaliser l'étanchéité du hayon (4) ou du capot de coffre (4), des profilés latéraux (11, 12) situés à distance l'un de l'autre étant formés sur le hayon (4) ou le capot de coffre (4),
**caractérisé en ce que**
les profilés latéraux (11, 12) comportent chacun une cavité (40), dans laquelle est respectivement monté un dispositif (22, 23, 24, 25) permettant de lever et/ou d'abaisser le hayon (4) ou le capot de coffre (4), et chaque dispositif (22, 23, 24, 25) est articulé entre le segment de toit (6) de la carrosserie (2) et le hayon ou le capot de coffre (4).

2. Véhicule conforme à la revendication 1,
**caractérisé en ce que**
le dispositif (22) permettant de lever et/ou d'abaisser le hayon ou le capot de coffre (4) est un composant susceptible de libérer une force élastique accumulée, la force élastique libérée étant reconduite manuellement après l'action d'assistance prévue, ou le dispositif (22) étant relié à une source d'énergie de sorte que l'énergie soit directement appliquée lors de l'utilisation du dispositif (22).

3. Véhicule conforme à la revendication 1 ou 2,
**caractérisé en ce que**
le dispositif (22) est un ressort pneumatique, en particulier un ressort à gaz sous pression (23) qui permet d'obtenir outre la fourniture d'une force élastique également un amortissement.

4. Véhicule conforme à la revendication 2,
**caractérisé en ce que**
le dispositif (22) est un dispositif entraîné par un moteur électrique.

5. Véhicule conforme à la revendication 4,
**caractérisé en ce que**
le dispositif (22) entraîné par un moteur électrique comporte en tant que moyen d'entraînement des vis de déplacement ou un câble de transmission.

6. Véhicule conforme à l'une des revendications précédentes,
**caractérisé en ce qu'**
une extrémité (27) et chacun des dispositifs (22, 23, 25) est montée sur un palier (28) monté sur le profilé latéral (11, 12) respectif du hayon ou du capot de coffre (4), et l'extrémité opposée (30) du dispositif (22, 23, 24) est articulée sur un palier (31) qui est formé sur un composant (6, 32) de la carrosserie.

7. Véhicule conforme à l'une des revendications précédentes,
**caractérisé en ce qu'**
une extrémité libre (45) d'une charnière (15, 16) est fixée sur le profilé latéral (11, 12) respectif du hayon ou du capot de coffre (4), et l'extrémité libre opposée (45) de la charnière (15, 16) est montée sur un palier (18) formé sur un composant (6) de la carrosserie (2).

8. Véhicule conforme à l'une des revendications précédentes,
**caractérisé en ce que**
la cavité (40) de chacun des profilés latéraux (11, 12) est dimensionné de sorte que chaque dispositif (22) puisse être déplacé avec un jeu entre des paliers de fin de course (41, 42), les paliers de fin de course (41, 42) correspondant à la position fermée (7) du hayon ou du capot de coffre (4) ou à la position ouverte (43) du hayon ou du capot de coffre (4).

9. Véhicule conforme à l'une des revendications précédentes,
**caractérisé en ce que**
la dimension de l'ouverture de hayon (3) est augmentée par la suppression d'une gouttière (34) ou la diminution de la largeur d'une gouttière (34) sur un segment de profilé (33) qui est formé sur les composants de carrosserie (5, 6) de l'ouverture de hayon (3) et sur lequel est fixé un profilé d'étanchéité (9).
